# EUROPEAN PATENT APPLICATION

(11) **EP 4 431 171 A1**
(43) Date of publication of application: **18.09.2024**
(21) Application number: 23161655.8
(22) Date of filing: 14.03.2023
(51) Int. Cl.: B01D 46/00, B01D 46/10, B01D 46/52

(54) **AMBIENT AIR FILTER DEVICE AND USE OF A FILTER ELEMENT IN AN AMBIENT AIR FILTER DEVICE**

(71) Applicant: MANN+HUMMEL GmbH, 71636 Ludwigsburg (DE)
(72) Inventor: JUNGINGER, Bernd, 70565 Stuttgart (DE); THEBAULT, Eric, 71640 Ludwigsburg (DE); DOS SANTOS ASCENSAO, Macario Francisco, 71696 Möglingen (DE)
(74) Representative: Mann + Hummel Intellectual Property

(57) **Abstract**

The invention relates to an ambient air filter device (100) for arrangement in a front area of a vehicle, the ambient air filter device (100) including an installation frame (30) for air to flow through the installation frame (30), and a filter element (10) arranged on the installation frame (30), the installation frame (30) providing a flow area (36) for the filter element (10), and the filter element (10) including an air inlet side (32) and an air outlet side (34). The installation frame (30) includes receiving elements (40) on opposing sides of the flow area (36) of the installation frame (30), the receiving elements (40) being for mounting and/or dismounting the filter element (10) along an insertion or removal direction (50).

The invention further relates to a use of the filter element (10) in the ambient air filter device (100).

## Description

### Technical Field

The invention relates to an ambient air filter device for arrangement in a front area of a vehicle as well as a use of a filter element in an ambient air filter device.

### Background Art

Air filters, which are integrated in the front area of vehicles, are usually arranged in a separate filter frame as part of the air duct in front of the radiator.

WO 2022/053276 A1 discloses a filter element which comprises a fold pack consisting of filter material folded in a zig-zag shape, side strips attached to fold profiles of the fold pack, and at least one sealing section which protrudes at an angle from the fold pack on the head side of an end fold section. The sealing section has at least one notch or cutout, in particular for receiving a corresponding filter housing contour. In a filter assembly, the filter housing has a housing part with at least one engagement element which forms the corresponding housing contour.

### Summary

It is an object of the invention to provide a compact and easily mountable ambient air filter device for arrangement in a front area of a vehicle, preventing a contact to a radiator of the vehicle.

Another object is to provide a use of a filter element in such an ambient air filter device.

According to an aspect of the invention the object is achieved by an ambient air filter device for arrangement in a front area of a vehicle, the ambient air filter device including an installation frame for air to flow through the installation frame (30), and a filter element arranged on the installation frame, the installation frame providing a flow area for the filter element, and the filter element including an air inlet side and an air outlet side. The installation frame includes receiving elements on opposing sides of the flow area of the installation frame, the receiving elements being for mounting and/or dismounting the filter element along an insertion or removal direction. The filter element includes a filter medium body that is at least partially covered by a sideband including a band segment folded down and pointing away from the filter medium body. The receiving elements of the installation frame include retaining members, and the filter element includes counter elements arranged on the band segment and for cooperating with the retaining members.

According to a further aspect of the invention the further object is achieved by a use of the filter element in the ambient air filter device, wherein the filter element, through which the air flows from the air inlet side to the air outlet side, is arranged in the installation frame by inserting the filter element with the counter elements into the retaining members of the receiving elements of the installation frame.

Advantageous embodiments are described in the dependent claims, the description and the drawings.

According to an aspect of the invention, an ambient air filter device for arrangement in a front area of a vehicle is proposed, the ambient air filter device having at least one installation frame which is designed for air to flow through it, wherein a filter element is arranged on the installation frame, the installation frame providing a flow area for the filter element. The filter element has an air inlet side and an air outlet side, wherein the installation frame has receiving elements on opposing sides of the flow area for mounting and/or dismounting the filter element along an insertion or removal direction. The filter element has a filter medium body which is at least partially covered by a sideband, wherein the sideband has a band segment folded down pointing away from the filter medium body. The receiving elements of the installation frame comprise one or more retaining members, and the filter element has counter elements arranged on the band segment for cooperating with the retaining members.

The proposed ambient air filter device may be arranged in a front area of a vehicle and realizes a design as flat as possible for packaging reasons. In order to avoid contact of the filter element with the radiator, the embodiments may use a flat flow-through plastic plate, with a mesh-like grid structure, on which the filter element is fixed. Implications on a crash zone of the vehicle may advantageously be prevented.

This offers major advantages compared to concepts according to state of the art, where the filter element is held either by drawers or groove structures in the area of the headband and/or sideband of the filter medium body.

By using a flat design, an additional fastening or securing device may be provided to prevent movement in the direction of driving of the vehicle.

The design is such that a flat installation frame serves as a receptacle for the filter element, which is fastened to the installation frame by means of retaining members. Depending on the design of the retaining member, an end stop or protrusion may be also provided on the underside of the installation frame to reduce the force required for the retaining member.

The retaining member can be mushroom-shaped or similar, such that the filter element can be mounted, for example, through holes in an L-leg of a sideband. The design of the holes in this case may be shaped such that the filter element may be threaded through a larger opening and then secured by sliding it into the final position.

Fewer mounting parts are necessary for mounting the filter element to the vehicle thus reducing weight of the vehicle and favoring sustainability aspects of the filter device.

According to a favorable embodiment of the ambient air filter device, the insertion or removal direction may be essentially parallel to a through-flow direction through the filter element.

In particular, the insertion or removal direction for mounting the filter element to the installation frame may be parallel to a surface normal of the support surface of the installation frame, thus favoring an easy mounting and exchanging situation in the vehicle.

According to a favorable embodiment of the ambient air filter device, the counter elements may be each formed as oblong holes through the band segment. The design of the holes in this case may be shaped such that the filter element may be threaded through a larger opening and then secured by sliding it into the final position.

The sideband of the filter element may advantageously be L-shaped with the band segment for placing the oblong holes for mounting to the installation frame.

Favorably, the oblong holes as counter elements for mounting and fixing the filter element may extend in their longitudinal extension along a longitudinal extension of the filter medium body.

According to a favorable embodiment of the ambient air filter device, the counter elements may comprise at least regions extending parallel to a planar extension of the filter medium body. Thus, a flat design of the counter elements for mounting the filter element to the receiving elements of the installation frame may be achieved.

Advantageously, in each case two strips of the sideband, in particular parallel strips, projecting from the filter medium body may be arranged as band segments on the sides of the filter medium body facing away from one another. The band segments may be arranged at a distance from one another, in particular in a through-flow direction of the filter element. Retaining members corresponding thereto may be in each case arranged on mutually opposite sides of the filter medium body.

According to a favorable embodiment of the ambient air filter device, the retaining members may project in the insertion or removal direction, in particular the retaining members being mushroom-shaped, and the oblong holes may include openings in which the retaining members are inserted during assembly of the filter element, and include slots being connected to the openings and for fixing the filter element along a fixing direction in a final mounting position. By this way an easy and reliable fixing of the filter element to the installation frame may be achieved.

According to a favorable embodiment of the ambient air filter device, the installation frame may include an end stop, in particular a protrusion, at a lower end in the insertion or removal direction, the end stop being for fixing the filter element in an intended mounting position. Depending on the design of the retaining member, an end stop or protrusion may be provided on the underside of the installation frame to reduce a force required for the retaining member

According to a favorable embodiment of the ambient air filter device, end faces of the filter medium body that are free from the sideband may be covered with a headband. Thus, the filter medium body may be sealed from all sides for reliable filtering the air entering in the through-flow direction.

According to a favorable embodiment of the ambient air filter device, in a use arrangement both the air inlet side and the air outlet side of the filter medium body may be fluidically connected to the environment. Advantageously, the air inlet side may be adapted to be flown through by unfiltered air and the air outlet side may be adapted to be flown through by filtered air.

In this way, there is an advantageous flow through the ambient air filter device and thus through the filter element installed therein. In other words, the object of the invention is an ambient air purification device in which the filtered ambient air may not be primarily fed to target systems fixed to the vehicle, but may be released back into the environment in order to purify the ambient air and make the environment in which a vehicle equipped with the ambient air filter device is located cleaner.

According to a favorable embodiment of the ambient air filter device, the installation frame may include a grid arranged parallel to the filter element through which the air flows and on which the filter element is arranged. Effective flow of the filtered air through the air filter device may be achieved.

According to a favorable embodiment of the ambient air filter device, the installation frame may be formed as part of the vehicle. Thus, a stable connection of the installation frame to the vehicle is ensured for reliable mounting of the filter element to the installation frame.

According to an aspect of the invention, a use of a filter element in an ambient air filter device is proposed, wherein the filter element, through which air flows from an air inlet side to an air outlet side, is arranged in an installation frame by inserting the filter element with mating counter elements into retaining members of receiving elements of the installation frame. The installation frame may or may not be integrated with a vehicle.

According to the proposed use of a filter element in an ambient air filter device the filter element is easily mountable in the installation frame. Flat packaging of the air filter device may be ensured. By using a flat design, an additional fastening or securing device may be provided to prevent movement in the direction of driving of the vehicle. Easy exchange of the filter element for maintenance reasons is possible. Implications on a crash zone of the vehicle may advantageously be prevented.

### Brief Description of Drawings

The present invention together with the above-mentioned and other objects and advantages may best be understood from the following detailed description of the embodiments, but not restricted to the embodiments, wherein is shown in:
Figure 1 is a filter element for an ambient air filter device for arrangement in a front area of a vehicle according to an embodiment of the invention in an isometric view;
Figure 2 is an installation frame of the ambient air filter device according to the embodiment of the invention in an isometric view;
Figure 3 is an ambient air filter device according to the embodiment of the invention in an isometric view;
Figure 4 is a detailed view of detail A according to Fig. 3;
Figure 5 is a plan view of the ambient air filter device according to Fig. 3;
Figure 6 is a side view of the ambient air filter device according to Fig. 3;
Figure 7 is a filter element for an ambient air filter device according to a further embodiment of the invention in an isometric view;
Figure 8 is an installation frame of the ambient air filter device according to the further embodiment of the invention in an isometric view;
Figure 9 is an ambient air filter device according to the further embodiment of the invention in an isometric view;
Figure 10 is a detailed view of detail A according to Fig. 9;
Figure 11 is mounting of the filter element to the installation frame for the embodiment shown in Fig. 9;
Figure 12 is a filter element for an ambient air filter device according to an embodiment of the invention in an isometric view;
Figure 13 is an installation frame of the ambient air filter device according to the embodiment of the invention in an isometric view;
Figure 14 is an ambient air filter device according to the further embodiment of the invention in an isometric view;
Figure 15 is a cross sectional detailed view of a first step of mounting the filter element to the installation frame according to the embodiment shown in Fig. 14;
Figure 16 is a cross sectional detailed view of a next step of mounting the filter element to the installation frame;
Figure 17 is a cross sectional detailed view of the filter element mounted to the installation frame;
Figure 18 is a filter element for an ambient air filter device according to a further embodiment of the invention in an isometric view;
Figure 19 is a detailed view of detail B according to Fig. 18;
Figure 20 is the filter element according to Fig. 18 with a band segment prepared for mounted to the installation frame;
Figure 21 is a detailed view of detail A according to Fig. 20;
Figure 22 is the filter element according to Figure 20 ready for mounting;
Figure 23 is the installation frame of the further embodiment of the invention in an isometric view;
Figure 24 is a top view of the ambient air filter device according to the further embodiment with the filter element mounted; and
Figure 25 is a detailed view of detail C according to Fig. 24.

### Detailed Description

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

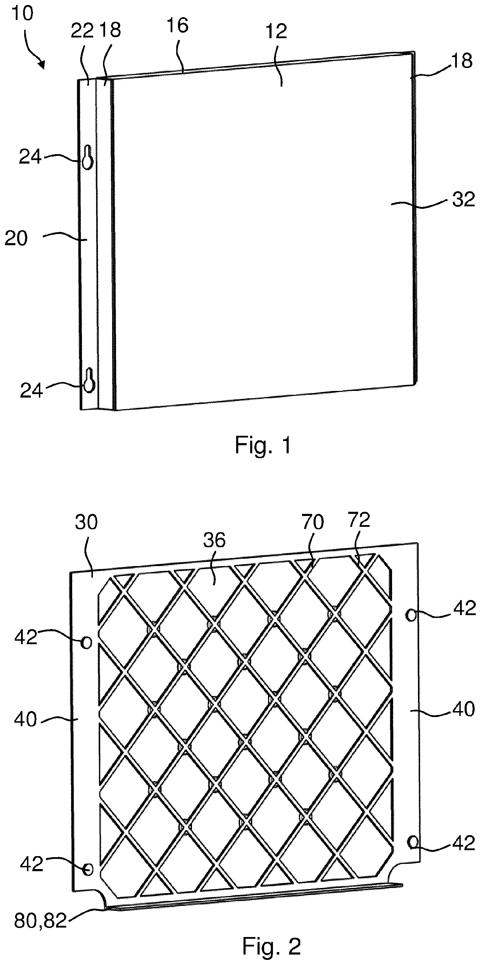

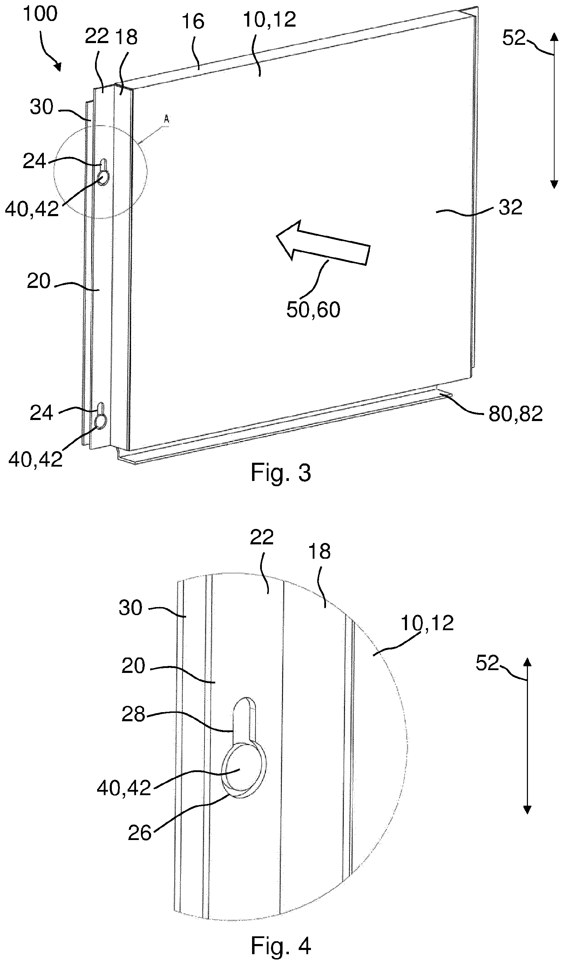

Figures 1 to 6 depict a first embodiment of the invention. Figure 1 depicts a filter element 10 for an ambient air filter device 100 for arrangement in a front area of a vehicle according to an embodiment of the invention in an isometric view. Figure 2 depicts an installation frame 30 for mounting the filter element 10, whereas in Figure 3 the ambient air filter device 100 with the mounted filter element is shown. Figure 4 depicts a detailed view of detail A according to Figure 3.

As shown in Figure 1, the filter element 10 has a filter medium body 12 which is at least partially covered by a sideband 18, wherein the sideband 18 has a band segment 22 folded down pointing away from the filter medium body 12. The filter element 10 has an air inlet side 32 and an air outlet side 34. End faces of the filter medium body 12 which are free from the sideband 18 may be covered with a headband 16.

The ambient air filter device 100 has an installation frame 30 which is designed for air to flow through it.

As shown in Figure 2, the installation frame 30 is provided with a grid 70 arranged parallel to the filter element 10 through which a flow can pass and on which the filter element 10 can be arranged. The filter element 10 is arranged on the installation frame 30, wherein the installation frame 30 provides a flow area 36 for the filter element 10. The installation frame 30 may be formed as part of the vehicle.

The installation frame 30 has receiving elements 40 on opposing sides of the flow area 36 for mounting and/or dismounting the filter element 10 along an insertion or removal direction 50 (see Figure 3). The insertion or removal direction 50 is essentially parallel to a through-flow direction 60 through the filter element 10. In particular the insertion or removal direction 50 may be parallel to a surface normal of the support surface 72 of the installation frame 30. The support surface 72 in this embodiment is realized by the grid 70 of the installation frame 30 and supports the mounted filter element 10.

The receiving elements 40 of the installation frame 30 comprise one or more retaining members 42. The filter element 10 has counter elements 20 arranged on the band segment 22 for cooperating with the retaining members 42. The counter elements 20 are each formed as oblong holes 24 in the band segment 22.

The filter element 10, through which air flows from the air inlet side 32 to the air outlet side 34, may be arranged in the installation frame 30 by inserting the filter element 10 with the mating counter elements 20 into the retaining members 42 of the receiving elements 40 of the installation frame 30.

For forming the band segments 22, the sideband 18 is L-shaped. The counter elements 20 extend in their longitudinal extension along a longitudinal extension of the filter medium body 12. The counter elements 20 further may comprise at least regions which extend parallel to a planar extension of the filter medium body 12.

In each case two band segments 22, in particular parallel band segments 22, projecting from the filter medium body 12 are arranged on the sides of the filter medium body 12 facing away from one another. The band segments 22 are arranged at a distance from one another, in particular in a through-flow direction 60 of the filter element 10.

As shown in Figure 2, retaining members 42 of the installation frame 30 corresponding thereto may be in each case arranged on mutually opposite sides of the filter medium body 12.

The retaining members 42 are designed as projecting in the insertion or removal direction 50. The oblong holes 24 of the counter elements 20 of the filter element 10 have openings 26 in which the retaining members 42 engage during assembly of the filter element 10.

As may especially be seen from Figure 4, In particular, the retaining members 42 may be mushroom-shaped. The oblong holes 24 have a larger opening 26 for insertion of the retaining member 42 and a slot 28 connected to said larger opening 26 for fixing the filter element 10 along a fixing direction 52 in a final mounting position. Thus, the filter element 10 may be mounted in the insertion or removal direction 50 to the installation frame 30. The retaining members 42 are fed through the larger openings 26. Then the filter element 10 may slide along the fixing direction 52 in order to move the retaining members 42 to the slots 28 and fix the filter element 10 to the installation frame 30.

The installation frame 30 has an end stop 80, in particular a protrusion 82, at a lower end in the insertion or removal direction 50, for fixing the filter element 10 in an intended mounting position. Thus the force acting on the retaining members 42 in the fixing direction 52 may be reduced.

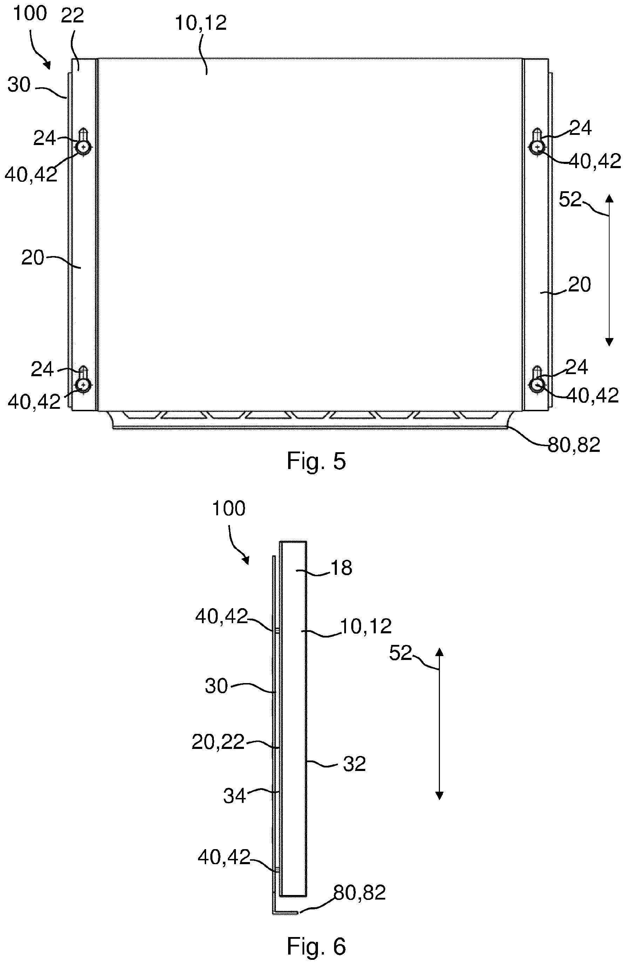

In Figure 5 a plan view of the ambient air filter device 100 according to Figure 3 in a mounted state of the filter element 10 is shown. Figure 6 depicts a side view of the ambient air filter device 100.

The filter element 10 is shown in a state where the retaining members 42 are still in the center of the larger opening 26 of the oblong hole 24. For moving the filter element 10 in the final mounting position the retaining members 42 may be moved to the slots 28 of the oblong holes 24 in the fixing direction 52. In this final mounting position the filter element 10 is resting on the protrusion 82 of the end stop 80 of the installation frame 30.

In a use arrangement both the air inlet side 32 and the air outlet side 34 of the filter element 10 may be fluidically connected to the environment.

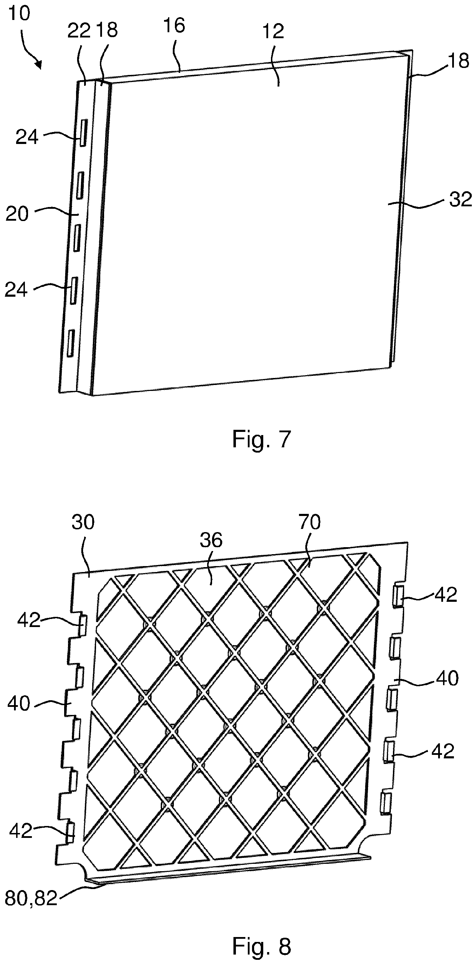

In Figures 7 to 11 a further embodiment of the invention is shown.

In this embodiment the filter element 10 is fixed to the installation frame 30 in the way of a ring binder.

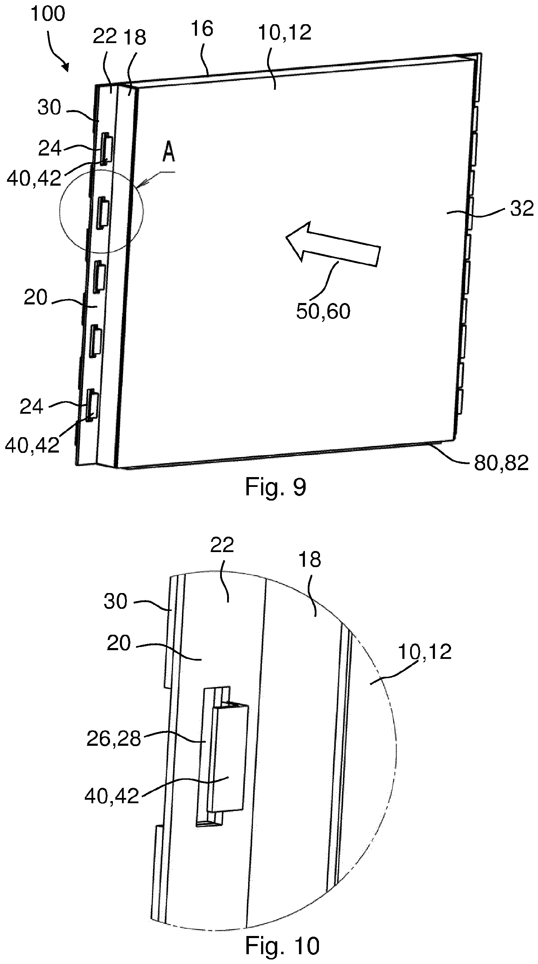

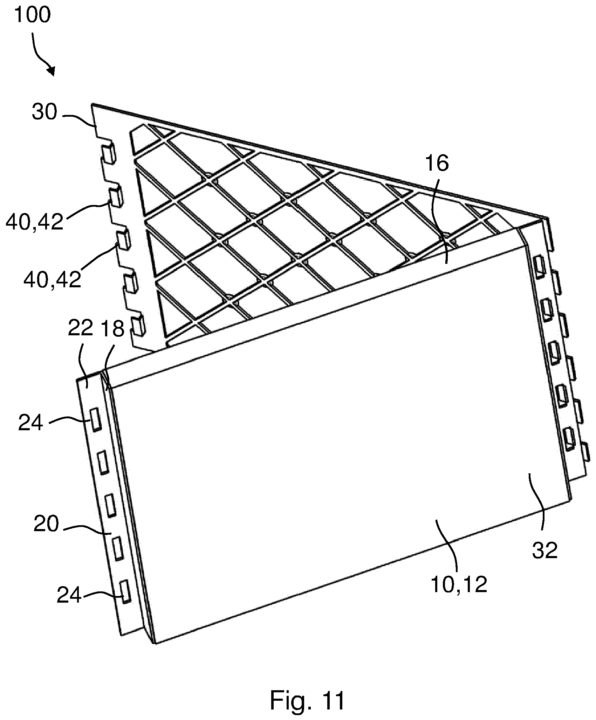

Figure 7 depicts a filter element 10 for an ambient air filter device 100 according to the further embodiment. Figure 8 depicts an installation frame 30, whereas in Figure 9 the ambient air filter device 100 with the mounted filter element 10 is shown. Figure 10 depicts a detailed view of detail A according to Fig. 9. In Figure 11 mounting of the filter element 10 to the installation frame 30 is depicted.

As can be seen from Figure 7, the counter elements 20 in the band segments 22 of the filter element 10 are also realized as oblong holes 24, but shaped in a rectangular way.

The retaining members 42 of the receiving elements 40 arranged on both sides of the installation frame 30 are shaped as shorter stripes which may be bent at a right angle, as may especially be seen from Figure 10.

When mounting the filter element 10 to the installation frame 30 the retaining members 42 may be fed through the oblong holes 24 of the counter elements 20 thus fixing the filter element 10 to the installation frame 30.

The mounting process is shown in Figure 11, where the filter element 10 is hooked at one side to the installation frame 30, whereas the second side is still free. Next the filter element 10 may be fixed on the second side by pressing on the first side in order to hook the oblong holes 24 on the second side to the retaining members 42.

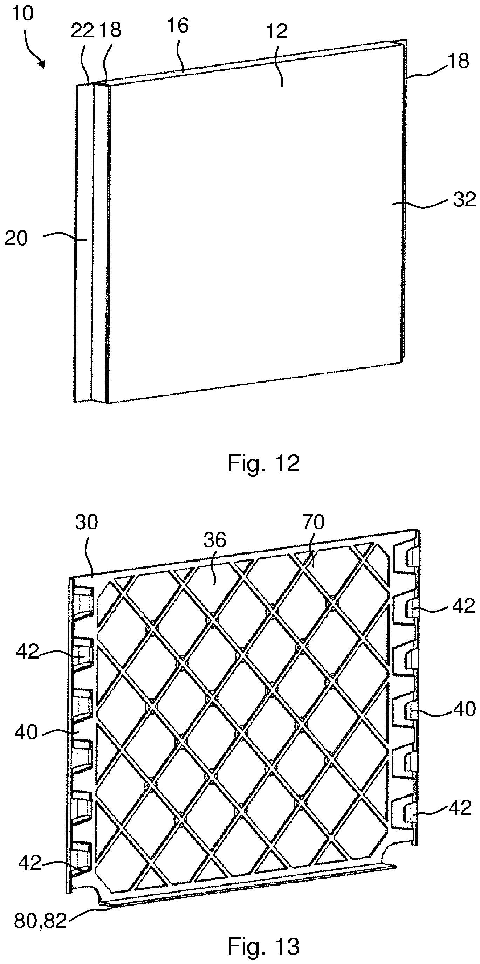

In Figures 12 to 17 a further embodiment of the invention is shown.

In this embodiment the filter element 10 may be fixed to the installation frame 30 by retaining members 42 shaped as retaining clips. Here, the L-legs of the sideband 18 are pressed into the retaining clips and the filter element 10 is thus secured against falling out. The band segment 22 is therefore slid under the retaining clips.

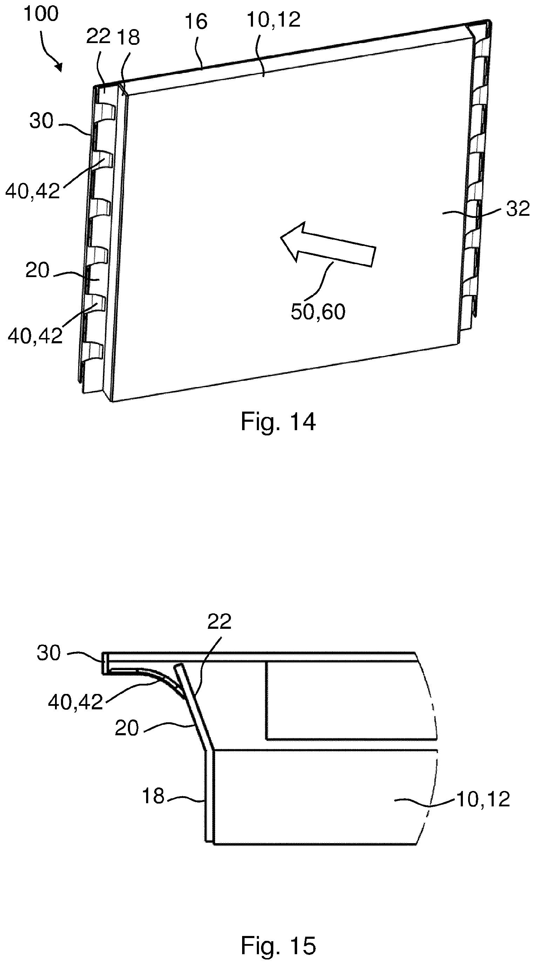

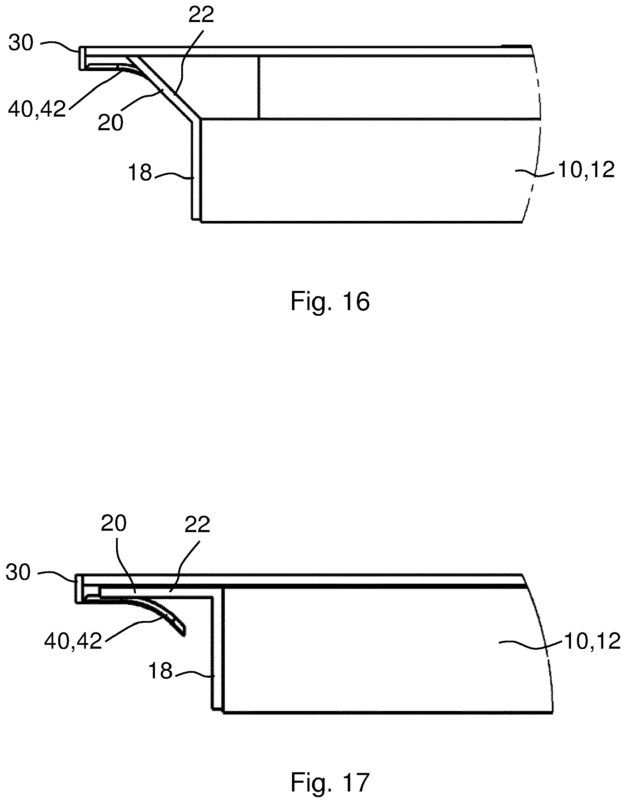

Figure 12 depicts a filter element 10 for an ambient air filter device 100 according to the further embodiment. Figure 13 depicts an installation frame 30, whereas in Figure 14 the ambient air filter device 100 with the mounted filter element 10 is shown. Figure 15 depicts a cross sectional detailed view of a first step of mounting the filter element 10 to the installation frame 30, Figure 16 a next step of mounting and Figure 17 the filter element mounted to the installation frame.

The different steps of fixing the filter element 10 to the installation frame 30 may be seen from Figures 15 to 17.

In Figure 15 the filter element 10 is moved towards the installation frame 30. The band segment 22 is still in a nearly straight way. The sideband 18 is not yet L-shaped. As the filter element 10 is further moved towards the installation frame 30 the band segment 22 is bent further in order to slip under the retaining clip of the retaining member 42, as may be seen from Figure 16. In the final position in Figure 17 the sideband 18 is completely L-shaped and the band segment 22 is fully flat pressed towards the installation frame 30 by the retaining clip thus fixing the filter element 10.

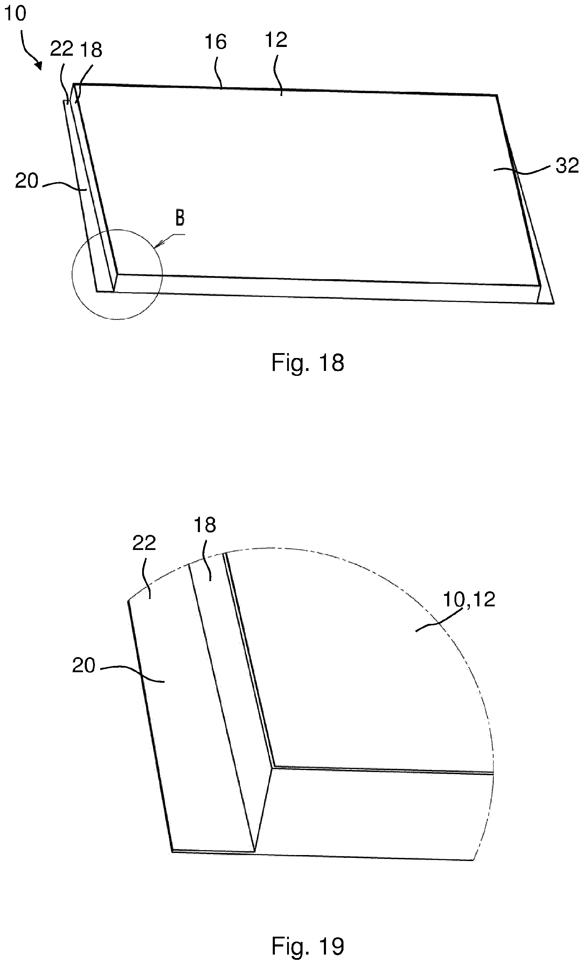

In Figures 18 to 25 a further embodiment of the invention is shown.

In this embodiment the filter element 10 is fixed to the installation frame 30 by folded sidebands 18.

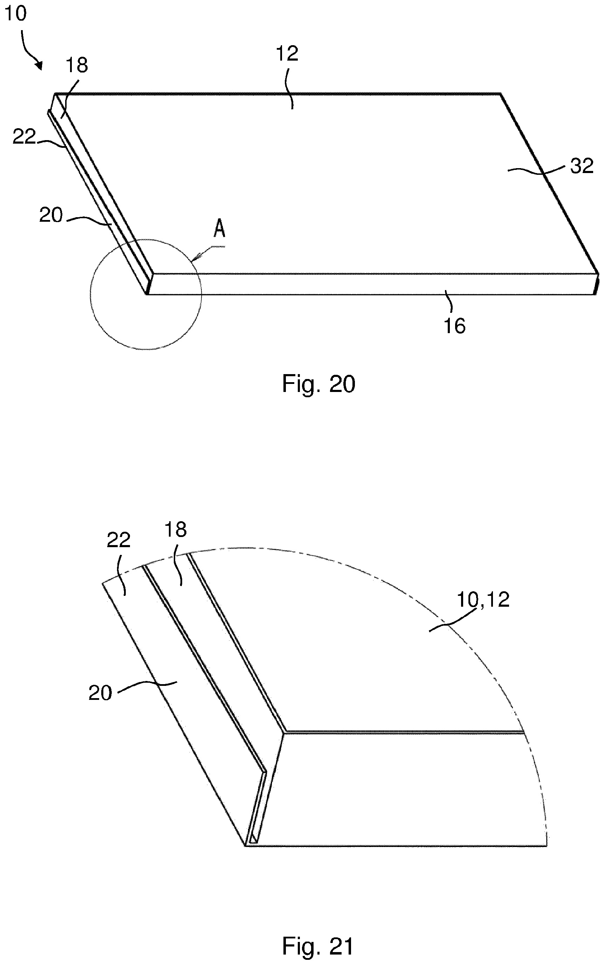

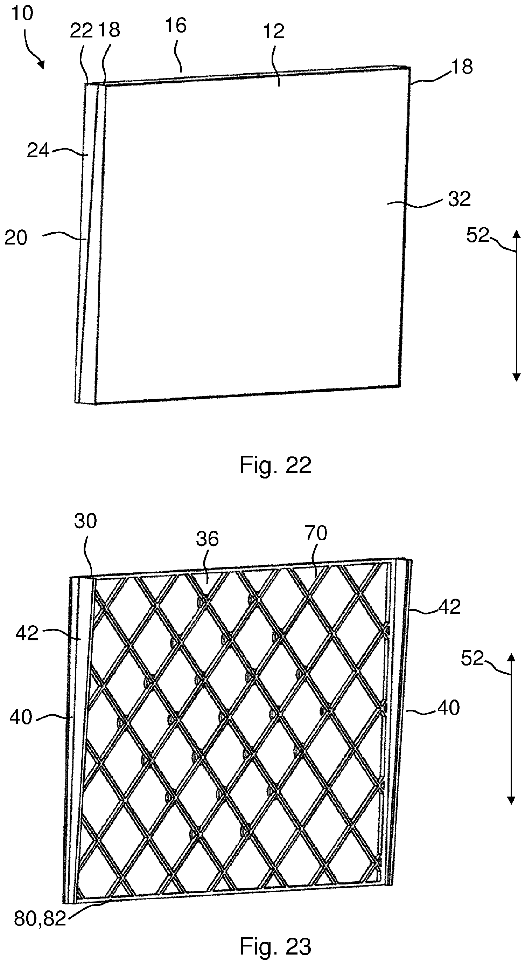

Figure 18 depicts a filter element 10 for an ambient air filter device according to the further embodiment, whereas Figure 19 shows a detailed view of detail B according to Fig. 18. Figure 20 depicts the filter element 10 with a band segment 22 prepared for being mounted to the installation frame 30, whereas Figure 21 shows a detailed view of detail A according to Fig. 20. In Figure 22 the filter element 10 is depicted ready for mounting and in Figure 23 the corresponding installation frame 30.

As may be seen from Figure 18, the sideband 18 is in the L-shape and the band segment 22 of the filter element 10 first is conically cut.

Next, as shown in Figures 20 and 21, the band segment 22 is folded up parallel to the side of the filter medium body 12. In Figure 22 the filter element 10 is ready for being mounted to the installation frame 30 show in Figure 23. The installation frame 30 for this purpose has retaining members 42 as receiving elements 40 which correspond to the folded band segments 22 such that the filter element 10 may be slid with the band segments 22 into the retaining members 42.

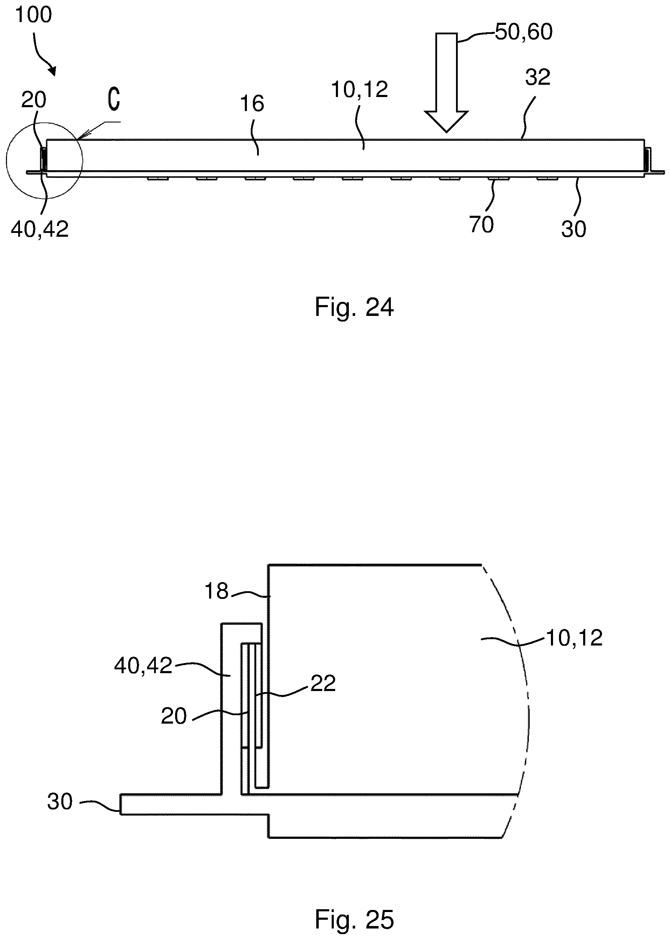

Figure 24 shows a top view of the ambient air filter device 100 with the filter element 10 mounted, whereas Figure 25 shows a detailed view of detail C according to Fig. 24. The filter element 10 there is slid into the receiving elements 40 of the installation frame 30 in a direction parallel to the flow area 36. Especially in the detailed view it may be seen how the folded band segment 22 is slid under the retaining member 42 of the installation frame 30 which is bent on an upper side in order to fix the band segment 22. Thus the band segment 22 is hold by the retaining member 42 shaped as a groove.

### Reference Numbers

- 10: filter element
- 12: filter medium body
- 14: filter medium
- 16: head band
- 18: side band
- 20: counter element
- 22: band segment
- 24: oblong hole
- 26: opening
- 28: slot
- 30: installation frame
- 32: air inlet side
- 34: air outlet side
- 36: flow area
- 40: receiving element
- 42: retaining member
- 50: insertion or removal direction
- 52: fixing direction
- 60: through-flow direction
- 70: grid
- 72: support surface
- 80: end stop
- 82: protrusion
- 100: ambient air filter device

## Claims

1. An ambient air filter device (100) for arrangement in a front area of a vehicle, the ambient air filter device (100) comprising:
an installation frame (30) for air to flow through the installation frame (30); and
a filter element (10) arranged on the installation frame (30), the installation frame (30) providing a flow area (36) for the filter element (10), and the filter element (10) comprising an air inlet side (32) and an air outlet side (34),
wherein the installation frame (30) comprises receiving elements (40) on opposing sides of the flow area (36) of the installation frame (30), the receiving elements (40) being for mounting and/or dismounting the filter element (10) along an insertion or removal direction (50),
wherein the filter element (10) comprises a filter medium body (12) that is at least partially covered by a sideband (18) comprising a band segment (22) folded down and pointing away from the filter medium body (12),
wherein the receiving elements (40) of the installation frame (30) comprise retaining members (42), and
wherein the filter element (10) comprises counter elements (20) arranged on the band segment (22) and for cooperating with the retaining members (42).

2. The ambient air filter device according to claim 1, wherein the insertion or removal direction (50) is essentially parallel to a through-flow direction (60) through the filter element (10).

3. The ambient air filter device according to claim 1 or 2, wherein the counter elements (20) are each formed as oblong holes (24) through the band segment (22).

4. The ambient air filter device according to any one of the preceding claims, wherein the counter elements (20) comprise at least regions extending parallel to a planar extension of the filter medium body (12).

5. The ambient air filter device according to claim 3 or 4, wherein the retaining members (42) project in the insertion or removal direction (50), in particular the retaining members (42) being mushroom-shaped, and
wherein the oblong holes (24) comprise openings (26) in which the retaining members (42) are inserted during assembly of the filter element (10), and comprise slots (28) being connected to the openings (26) and for fixing the filter element (10) along a fixing direction (52) in a final mounting position.

6. The ambient air filter device according to any one of the preceding claims, wherein the installation frame (30) comprises an end stop (80), in particular a protrusion (82), at a lower end in the insertion or removal direction (50), the end stop (80) being for fixing the filter element (10) in an intended mounting position.

7. The ambient air filter device according to any one of the preceding claims, wherein end faces of the filter medium body (12) that are free from the sideband (18) are covered with a headband (16).

8. The ambient air filter device according to any one of the preceding claims, wherein in a use arrangement, both the air inlet side (32) and the air outlet side (34) of the filter medium body (12) are fluidically connected to the environment.

9. The ambient air filter device according to any one of the preceding claims, wherein the installation frame (30) comprises a grid (70) arranged parallel to the filter element (10) through which the air flows and on which the filter element (10) is arranged.

10. The ambient air filter device according to any one of the preceding claims, wherein the installation frame (30) is formed as part of the vehicle.

11. A use of the filter element (10) in the ambient air filter device (100) according to any one of the preceding claims,
wherein the filter element (10), through which the air flows from the air inlet side (32) to the air outlet side (34), is arranged in the installation frame (30) by inserting the filter element (10) with the counter elements (20) into the retaining members (42) of the receiving elements (40) of the installation frame (30).
